Europäisches Patentamt

(19) European Patent Office

Office européen des brevets

(11) Publication number : **0 282 466 B1**

# (12) EUROPEAN PATENT SPECIFICATION

(45) Date of publication of patent specification :
**15.01.92 Bulletin 92/03**

(51) Int. Cl.[5] : **G01T 1/36**

(21) Application number : **88850062.6**

(22) Date of filing : **23.02.88**

(54) Method for measuring X-rays or gamma radiation and device for this.

(30) Priority : **04.03.87 SE 8700908**

(43) Date of publication of application :
**14.09.88 Bulletin 88/37**

(45) Publication of the grant of the patent :
**15.01.92 Bulletin 92/03**

(84) Designated Contracting States :
**AT BE CH DE ES FR GB GR IT LI LU NL SE**

(56) References cited :
**US-A- 3 752 986
INTERNATIONAL JOURNAL OF APPLIED
RADIATION AND ISOTOPES, vol. 34, no. 7,
July 1983, pages 997-1002, Pergamon Press
Ltd, Oxford, GB ; A.L. HUDDLESTON et al.:
"Dual-energy compton-scatter densitometry"
Medical Physics, vol 3, no 5, Sept/Oct 1976 ; M
Yaffe et al.: "Spectroscopy of diagnostic x-
rays by a Compton-scatter method"**

(73) Proprietor : **Ribberfors, Roland
Allmogegatan 92
S-583 30 Linköping (SE)**
Proprietor : **Matscheko, Georg
Drottninggatan 41
S-582 27 Linköping (SE)**

(72) Inventor : **Ribberfors, Roland
Allmogegatan 92
S-583 30 Linköping (SE)**
Inventor : **Matscheko, Georg
Drottninggatan 41
S-582 27 Linköping (SE)**

(74) Representative : **Onn, Thorsten et al
AB STOCKHOLMS PATENTBYRA Box 3129
S-103 62 Stockholm (SE)**

EP 0 282 466 B1

## Description

Clinical use of quantitative X-ray methods such as the determination of bone mineral content or tissue density for dose planning purposes demand a knowledge of the energy distribution of the x-rays. Spectrometry with germanium detectors requires counting rates of about 50000 pulses/second or less in order to avoid overlapping pulses (pile ups). With the high fluence from clinical x-ray tubes appropriate counting rates is attained only if the distance between the x-ray source and the detector is several meters and the collimators have diameters that are as small as 0.025-0.5 mm.

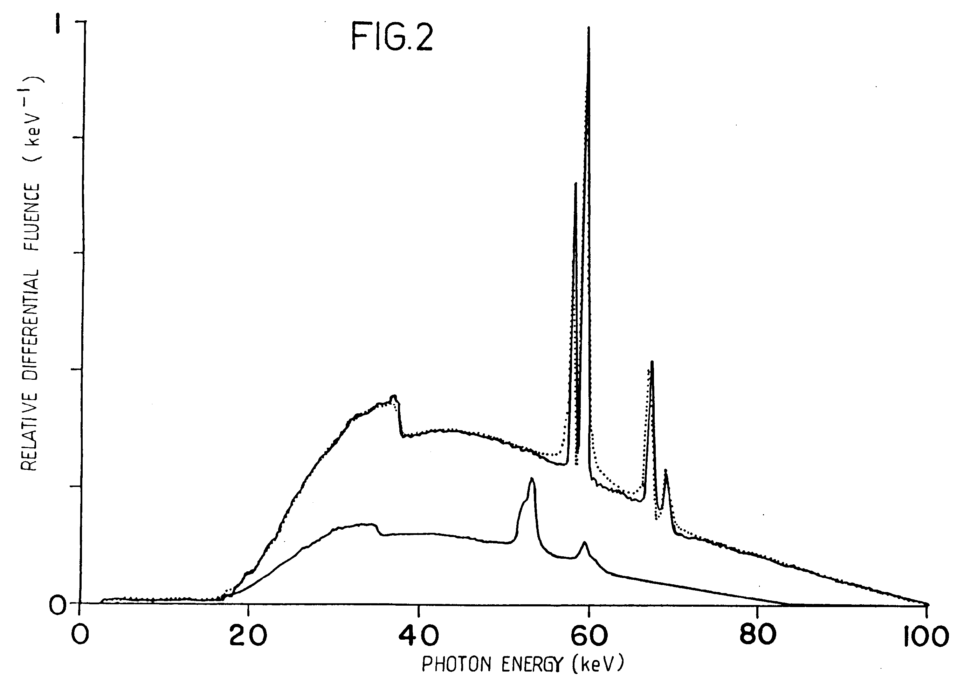

This direct measuring method cannot be used in practice in clinical x-ray laboratories due to space limitations. Fig 2, the upper continuous line, shows a spectrum measured directly.

Due to the practical difficulties of the direct measuring method it is only used to a small extent. Moreover, there will be problems with the alignment of the detector because it is easy to measure, by mistake, beside or on the edge of the x-ray focus which, of course, is not intended.

An extremely efficient method for reduction of the pulse rate is utilizing Compton scattering i.e. the radiation is scattered of the electrons in a material. However, when the radiation is scattered in this way energy is lost to the electrons and as a result of this the original spectrum will be distorted, the consequence being, in turn, that this is no longer representative. Accordingly Compton scattering has not been utilized so far as a basis of commercial spectrometry. Fig 2, the lower curve solid, shows a Compton scattered spectrum.

A method for using Compton scattering of x-rays is described in Medical Physics (1976) 3 : 328-334 in an article by M. Yaffe, K.W. Taylor and H.E. Jones titled "Spectroscopy of diagnostics x-rays by a Compton scatter method". In this method Compton scattering against a foil is used. This method will only allow a poor reconstruction of the original spectrum. Consequently today no good technique seems to be available for the measuring of x-ray energy spectrums and the above mentioned method is a dead end since it does not provide the necessary preciseness

Today therefore a precise method of measuring x-ray spectrums and a device therefor is lacking and the invention has as its object to provide a precise spectroscopic method and a corresponding device. In accordance with the invention this is astonishingly simple obtained by the method according to Claim 1 and the device according to Claim 2. In the invention, the above mentioned foil is substituted by a scatterer in the shape of a long and narrow filament or a long and narrow rod. Consequent calculations have shown that the major reason for the improvement is that the scattering angle is more exact and still provide the necessary mass and thus the necessary amount of electrons to provide the scattering.

The results of the invention are further enhanced by using correct scattering algoritms, even taking into consideration that the incoming x-ray radiation is polyenergetic.

By using a filament or rod a very well-defined scattering angle is obtained. Secondly, the scattering from the surrounding medium (air) is minimized as it is measured from the volume determined by the intersecting beam paths of the beam incident from the source and the beam path of the detector. Moreover, by using a very long and narrow filament or a very long and narrow rod having a circular cross-sectional area a possibility of varying direction is obtained as the scattering volume does not vary with the scattering angle.

By using in a suitable further development of the invention a material for the rod or filament having a low average atomic number the Doppler effect is reduced which, in turn, brings a better reproduction of adjacent peaks in the spectrum. As suitable materials polyethylene, lucite or another material having a low average atomic number is suggested. The reconstruction of the primary spectrum from the measured spectrum is carried out by means of the following formulas which have recently been produced by the inventors.

As the physics lying behind is complicated we will only give the final expressions.

$$\Phi_{0,h\nu_0}(h\nu_0)=N_{h\nu}(h\nu_c)/(N_e 1/2r_0^2 A(h\nu_0,h\nu_c)(\nu_c/\nu_0+\nu_0/\nu_c-\sin^2\theta)\overline{\Delta\Omega}) \quad (E1)$$

In the equation (E1) $N_{hv}(hv_c)d(hv_c)$ is the number of photons registered by the detector between the energies $hv_c$ and $hv_c + d(hv_c)$ after correction for the distortion of the detector itself (detector response).

$N_e =$ the total number of electrons in the scatterer
$r_0 =$ the standard electron radius = $2.82 * 10^{-15}$ m

$$A(h\nu_0,h\nu_c)=\exp(-1(a)\mu_a(h\nu_c)-(8r/3\Pi)(\mu_s(h\nu_0)+\mu_s(h\nu_c))) \quad (E2)$$

gives the radiation damping in the scatterer and in the air (attenuation).

$1(a) =$      the distance in air between the scatterer and the detector.

$u_a =$      the attenuation coefficient of air.

$u_s =$      the attenuation coefficient of the scatterer.

$r =$      the radius of the circular and filamentous scatterer

$h\nu_c =$      the energy of the Compton-scattered radiation

$h\nu_0 =$      the incoming energy resulting from the relation

$$h\nu_c = mc^2 h\nu_0 / (mc^2 + h\nu_0 (1 - \cos\theta)) \tag{E3}$$

The scattering angle $\theta$ is found in the equations (E1) and (E3). The self energy of the electron $= mc^2$.

In equation (E1) $\overline{\Delta\Omega}$ is the solid angle element subtend by the detector from a point in the scatterer on an average.

In equation (E1) $\Phi_{0,h\nu}(h\nu_0)$ represents the approximately reconstructed radiation intensity (before scattering). This corresponds to Fig. 2, dotted line, except the peaks.

We also reconstruct the peaks and must then work with a complicated expression containing numerical derivatives of $\Phi_{0,h\nu}(h\nu_0)$, equation (E1).

The average kinetic energy T of the electrons in the scatterer is also included. The expression reads :

$$\Phi_{1,h\nu}(h\nu_0) = \Phi_{0,h\nu}(h\nu_0) - (T/3mc^2)(\nu_0/\nu_c)^2 \{ (d^2\Phi_{0,h\nu}(h\nu_0)/d(h\nu_0)^2((h\nu_0)^2 +$$

$$(h\nu_c)^2 - 2h\nu_0 h\nu_c \cos\theta) + 2(d\Phi_{0,h\nu}(h\nu_0)/d(h\nu_0))(h\nu_0 - h\nu_c \cos\theta) \} \tag{E4}$$

$\Phi_{1,h\nu}$ in equation (E4) is only used for reconstruction on and around the peaks. Fig. 2, dotted curve, shows the total result when the equations (E1) and (E4) are combined. As is apparent, the reconstruction is very good. The difference between the continuous and dotted lines is very small.

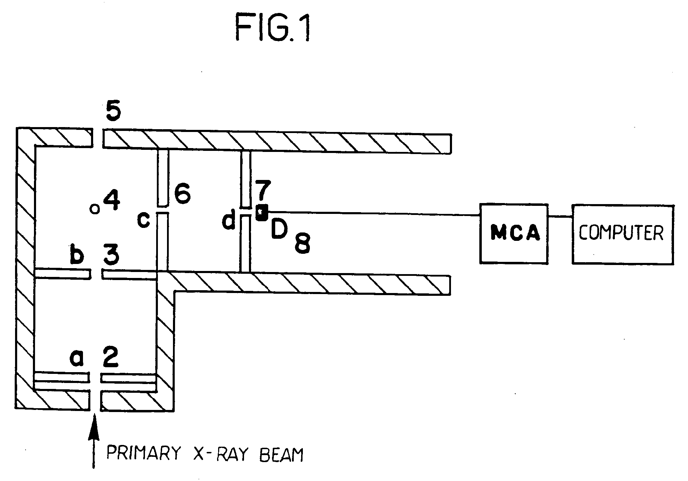

A practical illustrative example of the invention is apparent from the following description. <u>Fig. 1</u> shows schematically a scattering chamber according to the invention and <u>Fig. 2</u> shows the radiation curves already treated. The scattering chamber shown in Fig. 1 is substantially angular. In the first angle arm there is an aperture for incident, highly intensive x-radiation. Within the chamber there are a first collimator 2 and a second collimator 3 defining the radiation which thereafter hits the filament 4. The radiation passing the filament and past it passes out through an aperture 5 on the other side of the scattering chamber. At right angles to the direction of radiation through the collimators and the filament two collimators 6 and 7 are arranged and the radiation scattered in the filament passes through the collimators to a detector 8 in the other arm of the scattering chamber. In this case the detector is a High parity Ge-detector connected to a multichannel analyzer. This, in turn, is connected to a data processing unit reconstructing spectra according to the equations (E1)-(E4). a-c are collimators of the dimensions 3 mm $\times$ 25 mm. d is a collimator of the diameter 3 mm. D is the Ge-detector. O is the scatterer. The drawing is made almost on a correct scale. It is apparent from this that the chamber can easily be used on place in most existing x-ray equipments. The material of the filament is polyethylene, lucite or another material of a low average atomic number providing rapid and precise reconstructions. In the example shown air scattering corresponds to a very small portion of the totally detected intensity.

In the practical embodiment of the invention our calculation algorithms are preferably implemented in a computer so that a handy measuring instrument is obtained.

## Claims

1. A method for measuring high energy electromagnetic radiation by means of scattering where the high energy radiation and the spectrum of the scattered radiation is measured (8) at an angle to the original beam path and that thereafter the original spectrum is reconstructed from the measured spectrum, **characterized in** that a scatterer is used that is in the form of a long and narrow filament (4) or a long and narrow rod placed in the beam path of the high energy radiation that is to be measured.

2. A device for carrying out the method of claim 1 comprising a chamber having an aperture for the incident electromagnetic radiation, a scattering element provided in the chamber and a detector arranged at an angle relative the entering beam path of the high energy radiation that is to be measured **characterized in** that the scattering element is in the form of a long and narrow filament (4) or a long and narrow rod.

3. The device of claim 2, **characterized** in that the rod or filament is made of polyethylene, lucite or another material having a low average atomic number.

4. The device of any one of claims 2 or 3, **characterized** in that the detector angle is 90° relative to the incoming beam passage.

5. The device of any one of claims 2-4, **characterized** in that the filament or the rod has a circular cross-sectional area.

## Patentansprüche

1. Verfahren zur Messung hochenergetischer elektromagnetischer Strahlung mittels Streuung, wobei die hochenergetische Strahlung und das Spektrum der gestreuten Strahlung unter einem Winkel zum ursprünglichen Strahlengang gemessen wird (8) und daß danach das ursprüngliche Spektrum aus dem gemessenen Spektrum rekonstruiert wird, **dadurch gekennzeichnet**, daß ein Streuer in Form eines langen und schmalen Filaments (4) oder einer langen und schmalen Stange verwendet wird, das bzw. die im Strahlengang der zu messenden hochenergetischen Strahlung angeordnet ist.

2. Vorrichtung zur Durchführung des Verfahrens nach Anspruch 1, umfassend eine Kammer mit einer Öffnung für die einfallende elektromagnetische Strahlung, ein in der Kammer vorgesehenes Streuelement und einen Detektor, der unter einem Winkel relativ zum Eintrittsstrahlengang der zu messenden hochenergetischen Strahlung angeordnet ist, **dadurch gekennzeichnet**, daß das Streuelement in Form eines langen und schmalen Filaments (4) oder einer langen und schmalen Stange vorliegt.

3. Vorrichtung nach Anspruch 2, **dadurch gekennzeichnet**, daß die Stange oder das Filament aus Polyethylen, Lucite oder einem anderen Material mit einer niedrigen mittleren Atommassenzahl gefertigt ist.

4. Vorrichtung nach Anspruch 2 oder 3, **dadurch gekennzeichnet**, daß der Detektorwinkel relativ zum einfallenden Strahlengang 90° beträgt.

5. Vorrichtung nach einem der Ansprüche 2 bis 4, **dadurch gekennzeichnet**, daß das Filament oder die Stange eine kreisförmige Querschnittsfläche aufweist.

## Revendications

1. Procédé pour la mesure de rayonnement électromagnétique de haute énergie, par dispersion, selon lequel le rayonnement de haute énergie et le spectre du rayonnement dispersé sont mesurés (8) à un angle par rapport au trajet de faisceau initial et le spectre initial est ensuite reconstruit à partir du spectre mesuré, caractérisé en ce qu'un diffuseur est utilisé qui présente la forme d'un filament long et étroit (4) ou d'une barre longue et étroite, placé dans le trajet de faisceau du rayonnement de haute énergie qui doit être mesuré.

2. Dispositif pour la mise en oeuvre du procédé selon la revendication 1, comprenant une chambre ayant une ouverture pour le rayonnement électromagnétique incident, un élément de dispersion prévu dans la chambre et un détecteur disposé selon un angle par rapport au trajet de faisceau entrant du rayonnement de haute énergie qui doit être mesuré, caractérisé en ce que l'élément de dispersion présente la forme d'un long et étroit filament (4) ou d'une longue et étroite barre.

3. Le dispositif selon la revendication 2, caractérisé en ce que la barre ou le filament est réalisé en polyéthylène, lucite ou un autre matériau ayant un faible numéro atomique moyen.

4. Le dispositif selon l'une des revendications 2 ou 3, caractérisé en ce que l'angle de détecteur est de 90° par rapport au passage de faisceau arrivant.

5. Le dispositif selon l'une des revendications 2-4, caractérisé en ce que le filament ou la barre comprend une aire de section transversale circulaire.

# FIG.1

PRIMARY X-RAY BEAM

FIG.2

RELATIVE DIFFERENTIAL FLUENCE ( keV$^{-1}$ )

PHOTON ENERGY (keV)

EP 0 282 466 B1